(19) Europäisches Patentamt
European Patent Office
Office européen des brevets

(11) EP 0 869 987 B2

(12) **NOUVEAU FASCICULE DE BREVET EUROPEEN**

(45) Date de publication et mention de la décision concernant l'opposition:
**15.02.2006 Bulletin 2006/07**

(45) Mention de la délivrance du brevet:
**31.07.2002 Bulletin 2002/31**

(21) Numéro de dépôt: **96944072.6**

(22) Date de dépôt: **27.12.1996**

(51) Int Cl.:
*C08G 69/02* (2006.01) *C08G 69/04* (2006.01)
*C08G 69/14* (2006.01) *C08G 69/16* (2006.01)
*C08G 69/36* (2006.01) *C08G 69/48* (2006.01)

(86) Numéro de dépôt international:
**PCT/EP1996/005847**

(87) Numéro de publication internationale:
**WO 1997/024388 (10.07.1997 Gazette 1997/30)**

(54) **COMPOSITION CONTENANT UN POLYAMIDE ET PROCEDE DE FABRICATION DE CELLE-CI**
POLYAMID ENTHALTENDE ZUSAMMENSETZUNG UND VERFAHREN ZU IHRER HERSTELLUNG
COMPOSITION CONTAINING POLYAMIDE AND METHOD FOR ITS MANUFACTURE

(84) Etats contractants désignés:
**AT BE CH DE DK ES FI FR GB GR IE IT LI LU NL PT SE**

(30) Priorité: **29.12.1995 FR 9515878**
**29.12.1995 IT MI952779**

(43) Date de publication de la demande:
**14.10.1998 Bulletin 1998/42**

(60) Demande divisionnaire:
**02001677.0 / 1 223 185**

(73) Titulaire: **Rhodia Engineering Plastics Srl**
**20020 Ceriano Laghetto (MI) (IT)**

(72) Inventeurs:
- **CUCINELLA, Antonino**
**I-75012 Bernalda (IT)**
- **DI SILVESTRO, Giuseppe**
**I-20030 Lentate Sul Seveso (IT)**
- **GUAITA, Cesare**
**I-21049 Tradate (IT)**
- **SPERONI, Franco**
**I-20020 Ceriano Laghetto (IT)**
- **ZHANG, Haichun**
**I-75020 Marconia (IT)**

(74) Mandataire: **Esson, Jean-Pierre**
**Rhône-Poulenc Fibres**
**Service Brevets**
**Centre de Recherches des Carrières**
**B.P. 62**
**69192 Saint-Fons Cedex (FR)**

(56) Documents cités:
**EP-A- 0 345 648** **EP-A- 0 672 703**
**EP-B- 0 345 648** **DE-A- 1 942 452**
**US-A- 3 549 601** **US-A- 5 346 984**

- **J.R. Schaefgen, P.Flory, Journal of the American Society, 1948,70,2709-2718**
- **P.H. Seiden "Glasfaseverstärkte Kunststoffe", Springer-Verlag Berlin Heidelberg, 1967, 307-332**
- **Gächter/Müller, Kunstoffadditive, 3. Ausgabe, Hanser Verlag 1989, Chapitres 9,10,12, p.548-577**
- **Macromol. Chem. Phys. 2001, 202, 2086-2092**

EP 0 869 987 B2

## Description

La présente invention concerne une composition comprenant une matrice polymérique et des charges, la matrice comprenant un polyamide. Le polyamide comprend des chaînes macromoléculaires de structure chimique particulière. L'invention concerne aussi un procédé de fabrication de la composition.

Elle se rapporte plus particulièrement à des compositions dont la matrice polymérique est un polyamide constitué par des unités polymériques présentant une configuration d'étoile, et des unités linéaires polymériques.

L'utilisation de polyamides linéaires aliphatiques ou semi-aromatiques comme matière plastique formant la matrice d'une composition destinée à être mise en forme est connue depuis très longtemps. Pour améliorer les propriétés mécaniques de ces matières plastiques, ces compositions comprennent des charges sous forme de poudre ou de fibres, telles que par exemple des fibres de verre. Toutefois, ces charges provoquent une augmentation de la viscosité de la composition en milieu fondu, ou plus généralement limitent la vitesse d'écoulement de la composition quand celle-ci est injectée dans un moule. Pour obtenir un remplissage correct des moules ou une cadence de moulage rapide, il est nécessaire de limiter la quantité de charge dans la composition. Ainsi, les concentrations maximales admissibles sont généralement voisines de 40 % en poids.

Cet écoulement lent ou difficile des compositions chargées ou non a également comme conséquence un mauvais aspect de surface des pièces moulées. En effet, les charges telles que les fibres sont visibles en surface de la pièce. Pour remédier à ce problème, il a été proposé d'ajouter un polymère amorphe ou présentant une cinétique de cristallisation plus lente, à la matrice semi-cristalline, notamment quand cette dernière est un polyadipamide d'hexaméthylène.

Il a également été proposé d'utiliser des polymères à faible poids moléculaire pour ainsi améliorer le remplissage des moules, comme par exemple dans le brevet US 5 274 033. Toutefois, les propriétés mécaniques du matériau sont diminuées.

Des polyamides présentant une structure étoile obtenus avec des composés polyfonctionnels aromatiques sont décrits dans le brevet US 5346984. Cependant, ces polymères présentent une structure totalement en étoile et ont des poids moléculaires faibles. Ces deux caractéristiques limitent leur utilisation pour la fabrication de pièces moulées ou dans des applications industrielles et techniques car leurs propriétés mécaniques sont insuffisantes.

Un des buts de la présente invention est de remédier à ces inconvénients en proposant une composition comprenant une matrice polymérique et des charges, dont la matrice est un polyamide présentant une fluidité à l'état fondu élevée et des propriétés mécaniques comparables ou améliorées par rapport à un polyamide linéaire classique. La composition peut contenir un taux de charge élevé. Une telle composition a une bonne aptitude à être injectée pour la fabrication de pièces moulées.

A cet effet, l'invention propose une composition comprenant une matrice polymérique et des charges, dont la matrice polymérique comprend un polyamide comprenant des chaînes macromoléculaires répondant à la formule I suivante :

$$R_1[A-X(Y-R_2-Z)-_n-R_3]_m \qquad (I)$$

et à des chaînes macromoléculaires répondant à la formule II suivante :

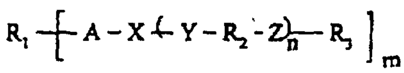

(I)

dans lesquelles :

- Y est le radical

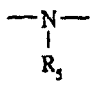

quand X et Z représentent le radical

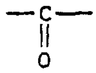

- Y est le radical

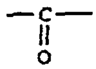

quand X et Z représentent le radica

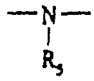

- A est une liaison covalente ou un radical hydrocarboné aliphatique pouvant comprendre des hétéroatomes, et comprenant de 1 à 20 atomes de carbone, de préférence de 1 à 6 atomes de carbone.
- $R_2$ est un radical hydrocarboné aliphatique ou aromatique ramifié ou non comprenant de 2 à 20 atomes de carbone.
- R3, représente :
  - l'hydrogène lorsque Z représente le radical

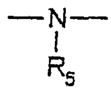 ;

  - l'hydroxyle lorsque Z représente le radical

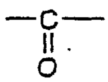 ;

ou

  - un radical hydrocarboné comprenant un groupement :

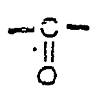 ou 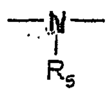

- R4 représente
  - l'hydrogène lorsque Y représente le radical

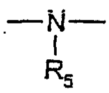 ;

  - l'hydroxyle lorsque Y représente le radical

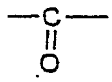 ;

ou

- un radical hydrocarboné comprenant un groupement :

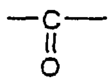 ou 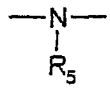

$R_5$ représente l'hydrogène ou un radical hydrocarboné comprenant de 1 à 6 atomes de carbone

- $R_1$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8 (bornes incluses)
- n est un nombre compris entre 100 et 200 (bornes incluses)
- p est un nombre compris entre 100 et 200 (bornes incluses)

et le rapport massique entre le poids de chaînes polymériques de formule I et le poids total de chaînes polymériques de formules I et II est compris entre 0,6 et 0,98.

Selon une caractéristique préférée de l'invention, le radical $R_2$ est un radical pentaméthylénique. Dans ce mode de réalisation le polyamide a une structure type polycaproamide ou PA 6.

Toutefois, d'autres radicaux $R_2$ peuvent être utilisés tels que les radicaux undécaméthylénique qui conduit à un polyamide à structure type PA 12. Il est également possible d'obtenir des polyamides présentant des radicaux $R_2$ comprenant 8 ou 10 atomes de carbone correspondant respectivement à des polyamides de structure type PA9 et PA11.

Plus généralement, les radicaux $R_2$ qui sont des restes d'aminoacides ou de lactames sont convenables pour la présente invention.

Selon encore une autre caractéristique préférée de l'invention, le radical $R_1$ est soit un radical cycloaliphatique tel que le radical tétravalent de cyclohexanonyle, soit un radical 1,1,1-triyle-propane, 1,2,3-triyle-propane triyle.

Comme autres radicaux $R_1$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyethylènique.

Selon un mode de réalisation préféré de l'invention, le nombre m est supérieur à 3 et avantageusement égal à 3 ou 4.

Ainsi, les chaînes polymériques de formule I définissent un polyamide étoile comprenant des branches polyamides de type PA 6 dans un des modes de réalisation préférés de l'invention, et un noyau central constitué par un noyau cycloaliphatique.

Ces chaînes polymériques de formule I sont, en mélange avec des chaînes polyamides linéaires de formulé II.

La longueur ou le poids moléculaire des chaînes linéaires de formule II ou des branches du polyamide étoile peut être élevé. Ainsi, le polymère linéaire comme la chaîne de chaque branche du polymère étoile présente un $\overline{Mn}$ avantageusement supérieur à 10 000.

L'invention a également pour objet un procédé de fabrication de la composition décrite ci-dessus. Ce procédé de fabrication compend une étape de synthèse d'un polyamide et une étape de mélange de la charge avec le polyamide à l'état fondu, par extrusion, le polyamide étant obtenu par une polycondensation d'un aminoacide ou d'un lactame de formules III et IV suivantes :

$$HOOC\text{-}R_2\text{-}NH_2 \qquad (III)$$

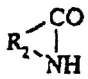 (IV)

en présence d'un composé polyfonctionnel de formule V dans lesquelles les symboles $R_1$, $R_2$, A, X et m ont les significations indiquées précédemment.

Selon l'invention, cette polycondensation est réalisée en présence d'un initiateur de polycondensation.

La fonction réactive du composé multifonctionnel représentée par le symbole X-H est une fonction capable de former une fonction amide.

A titre d'exemple de composés polyfonctionnels de formule V, on peut citer le composé 2,2,6,6-tétra-(β-carboxyéthyl)cyclohexanone, le composé diaminopropane - N,N,N',N' acide tétraacétique de formule suivante :

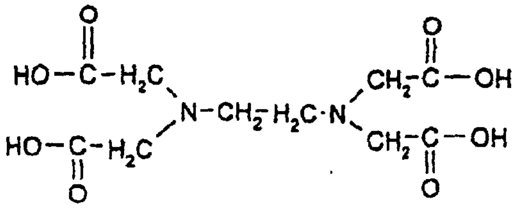

ou les composés provenant de la réaction du triméthylol propane ou du glycérol avec l'oxyde de propylène et amination des groupes hydroxydes terminaux, ces derniers composés sont commercialisés sous le nom commercial JEFFAMINES T® par la société HUNTSMAN, et ont comme formule générale :

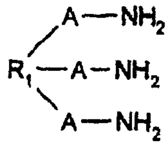

$$R_1\left[A-X-H\right]_m \qquad (V)$$

lorsque X représente le radical

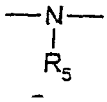 ;

et

$$-R_1[A\text{-}X\text{-}OH]_m \qquad (V)$$

lorsque X représente le radical

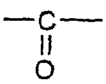 ;

et

Dans laquelle:

- $R_1$ représente un radical 1,1,1-triyle propane, ou 1,2,3-triyle propane,
- A représente un radical polyoxyéthylénique.

les initiateurs de polycondensation sont ceux classiquement utilisés dans la synthèse des polyamides par polycondensation d'un lactame ou d'un aminoacide, tel que la synthèse du polycaproamide.

A titre d'exemple, on peut citer l'eau, les acides minéraux ou carboxyliques ou les aminés primaires comme initiateur de polycondensation.

Ce composé est ajouté avantageusement pour obtenir une concentration pondérale comprise entre 0,5 et 5 % en poids par rapport au mélange total.

La polycondensation est réalisée selon les conditions opératoires classiques de polycondensation des aminoacides ou lactames de formule III ou IV, quand celle-ci est réalisée en absence du composé multifonctionnel de formule V.

Ainsi, le procédé de polycondensation comprend brièvement :

- un chauffage sous agitation et sous pression du mélange des monomères (composés de formule III et/ou IV) et du composé de formule V avec l'initiateur (généralement de l'eau),
- Maintien du mélange à cette température pendant une durée déterminée, puis décompression et maintien sous un courant de gaz inerte (par exemple de l'azote) pendant une durée déterminée à une température supérieure au point de fusion du mélange pour ainsi continuer la polycondensation par élimination de l'eau formée.

Selon le procédé de l'invention, la durée du maintien sous gaz inerte, ou en d'autres termes de finissage de la polycondensation permet de déterminer et contrôler la concentration en chaînes polymériques de formule I dans le mélange polyamide. Ainsi, plus le temps de maintien sera long plus la concentration en chaînes polymériques de formule I sera élevée.

Il est également évident que la concentration en chaînes polymériques de formule I ou polyamide étoile est fonction de la quantité de composé multifonctionnel de formule V ajoutée dans le mélange.

Il est également possible, sans pour cela sortir du cadre de l'invention, d'ajouter au mélange de polycondensation d'autres monomères comprenant des fonctions susceptibles de former des fonctions amides pour ainsi obtenir des copolyamides ou polyamides modifiés.

Toutefois, quand ces monomères sont des diacides ou diamines, ils ne pourront être ajoutés qu'en faible quantité avantageusement à une concentration pondérale inférieure à 20 % par rapport au mélange total.

En sortie de polycondensation, le polymère est refroidi avantageusement par de l'eau, et extrudé sous forme de jonc. Ces joncs sont coupés pour produire des granulés.

Pour éliminer les monomères non polycondensés, notamment dans le cas où un des monomères est du caprolactame, les granulés sont lavés à l'eau puis séchés sous vide.

Le polymère obtenu peut être mis en forme selon les techniques habituelles de moulage, extrusion, filage pour produire des pièces moulées, films, fils.

Le polyamide comprenant des chaînes macromoléculaires de formule I et de formule II est utilisé comme élément ou composant d'une matrice en matière thermoplastique d'une composition destinée à être mise en forme pour la fabrication de pièces moulées.

Selon l'invention, la composition comprend une matrice polymérique, avantageusement en matière thermoplastique et des charges modifiant les propriétés de la matrice telles que ses propriétés mécaniques, d'ignifugation, de conductivité thermique, électrique ou magnétique, ou analogues. Comme exemples de charges usuelles, on peut citer les charges de renfort ou charges de remplissage.

Selon l'invention, la matrice polymérique comprend comme constituant unique ou non le polyamide comprenant des chaînes macromoléculaires de formule et de formule II.

Comme ce polyamide présente un indice de fluidité à l'état fondu plus élevé que les polyamides linéaires connus, pour des masses moléculaires et des propriétés mécaniques similaires, la composition chargée peut être injectée plus facilement dans un moule , c'est-à-dire à des cadences plus élevées. Elle permet également d'obtenir un remplissage plus homogène et complet des moules, notamment quand ceux-ci ont une forme complexe.

Le polyamide permet également de réaliser des compositions contenant un taux de charges élevé pouvant être égal jusqu'à 80 % en poids par rapport à la composition totale. Le taux de charge est de préférence compris entre 40 % et 80 %, encore plus préférablement entre 50 % et 80 %.

Une telle composition peut être injectée grâce à l'indice élevé de fluidité à l'état fondu du polyamide de l'invention. Les propriétés mécaniques de cette composition sont élevées car elles sont généralement améliorées quand le taux de charge augmente.

Comme charges de remplissage ou de renfort convenables pour l'invention, on peut citer les charges utilisées habituellement pour renforcer les compositions en matière polymérique, telles que les charges fibreuses comprenant les fibres minérales telles que, par exemple, les fibres de verre, les fibres de carbone, les fibres de céramique, les fibres en matière synthétique telles que les fibres en polyaramides, les charges en poudre comme le talc, la montmo-rillonite, le kaolin par exemple.

Des charges en poudre sont également utilisées pour améliorer l'ignifugation de la composition. De telles charges sont par exemple, des composés métalliques tels que l'hydroxyde de magnésium ou l'hydroxyde d'aluminium.

Les fibres de verre sont la charge de renfort préférée de l'invention.

Selon une autre caractéristique préférée de l'invention la matrice polymérique de la composition est constituée par un mélange du polyamide comprenant des chaînes macromoléculaires de formule 1 et de formule II avec un ou plusieurs autres polymères, de préférence polyamides ou copolyamides.

Comme autres polymères préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, un lactame, un aminoacide ou un mélange de ces différents monomères.

A titre d'exemple, on peut citer comme autres polymères le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

Dans ce mode de réalisation, la concentration pondérale en polyamide comprenant des chaînes macromoléculaires de formule I et de formule II dans la matrice peut varier dans un domaine large et est avantageusement comprise entre 30 et 80 % de la masse totale de matrice polymérique.

Il est également avantageux, notamment dans ce cas, que le rapport massique en polyamide étoile (formule I) dans le polyamide comprenant des chaînes macromoléculaires de formule I et de formule II soit supérieur à 0,8,

Les compositions de l'invention peuvent comprendre également tous les additifs usuels tels que ignifugeants, stabilisants chaleur et lumière, cires, pigments ou analogues.

De telles compositions sont utilisées pour réaliser des pièces moulées pour l'industrie automobile, des composants électriques, des accessoires pour différentes activités telles que les activités sportives, par exemple.

D'autres détails, avantages de l'invention apparaîtront plus clairement au vu des exemples donnés ci-dessous uniquement à titre indicatif et d'illustration,

Exemple 1 - Synthèse d'un polyamide conforme à l'invention

La polymérisation est réalisée dans un autoclave chauffé et comprenant des moyens d'agitation.

4444 g de caprolactame et 136 g de 2,2,6,6-tétra-(β-carboxyéthyl)cyclohexanone sont ajoutés dans l'autoclave avec 160 g d'eau distillée.

Le composé de cyclohexanone et son procédé de synthèse sont décrits dans l'article "The Chemistry of Acrylonitrile II - Reactions with Ketones" JACS 64 2850 (1942) de Herman Alexander Buison et Thomas W. Riener.

Le mélange, mis sous agitation, est chauffé à une température de 265°C sous 6 bars.

Il est maintenu à cette température et pression pendant 2 heures.

La pression est ensuite diminuée, puis un balayage de l'autoclave par l'azote est réalisé pendant des durées variables, tout en maintenant la température à 265°C.

La concentration en polymère étoile de formule I est déterminée pour chaque durée de balayage.

Cette concentration est déterminée par la méthode mise au point par FARINA et al. et décrite dans le compte rendu de la 4° Convention Italienne sur la Science de la Macromolécule.

En résumé, cette méthode consiste à calculer le rapport massique de polymère étoile dans le mélange par détermination de la concentration en groupes terminaux aminés et/ou-acides et calcul de l'indice de polymolécularité D qui est égal à $\frac{Mw}{\overline{Mn}}$.

En effet, d'après un article de W. SWEENY et J. ZIMERMAN publié dans "ENCYCLOPEDIA OF POLYMER SCIENCE AND TECHNOLOGY Vol.10 pp194, l'équation classique du calcul de l'indice D pour un mélange de polymères est :

$$D = \frac{\overline{Mw}}{\overline{Mn}} = X^2_{W1} D_1 + X^2_{W1} D_2 + X_{W1} X_{W2} \left[ D_1 \frac{\overline{Mn}_1}{\overline{Mn}_2} + D_2 \frac{\overline{Mn}_2}{\overline{Mn}_1} \right] \quad (1)$$

dans laquelle :

$X_{W1}$ représente la fraction en poids du polymère de poids moléculaire en nombre $\overline{Mn}_1$ et d'indice de polymolécularité $D_1$.

Cette équation convient également très bien pour les composés polymériques contenant un composant multifonctionnel. En fait, si on a un mélange de polymère linéaire de fonctionnalité (f) égale à 2 et de polymère étoile de fonctionnalité (f) supérieure à 2 on peut faire les hypothèses suivantes :

- le mélange est composé uniquement de chaînes totalement linéaires et de chaînes totalement de type étoile.
- la longueur des chaînes linéaires est égale à celle d'une branche du polymère étoile.

Selon ces hypothèses, l'équation (1) a été transformée par M. FARINA en une équation (2) suivante :

$$D = 2 - \frac{(f-1)^2}{f} x^2_{W2} + \frac{(f-1)(f-2)}{f} x_{W2} \quad (2)$$

avec: $\overline{Mn_2} = f \cdot \overline{Mn_1}$ , $D_1 = 2$, $D_2 = 1 + \frac{1}{f}$ Avec une telle équation il est possible de calculer la relation entre D et la fraction en poids de $X_{W2}$ de polymère étoile dans le mélange polymérique. Cette relation est une fonction du coefficient de fonctionnalité (f) du composé multifonctionnel comme représentée dans la figure 1 annexée.

L'équation (2) peut être transformée en introduisant des paramètres expérimentaux tels que la concentration molaire Co du composé multifonctionnel et la concentration exprimée en milliéquivalent par kilogramme des fonctions terminales $NH_2$ et COOH:

$$D = 2 - f\,(f-1)^2 \left(\frac{Co}{f\,Co + [NH_2]}\right)^2 + (f-1)(f-2) \frac{Co}{f\,Co + [NH_2]}$$

Ainsi, il est aisé de calculer D et d'autres paramètres importants tels que :

$$\overline{Mn} = 10^6 / \left[Co + NH_2\right]$$

$$\overline{Mw} = 2\,10^6 \left[10Co + NH_2\right] / \left[4\,Co + NH_2\right]^2$$

$$X_{W2} = \left[COOH - NH_2\right] / \left[COOH\right]$$

Le polymère fondu est ensuite extrudé sous forme de jonc puis refroidi rapidement à l'eau et découpé en granulés.

Ces granulés sont lavés avec de l'eau distillée pendant environ 16 heures pour éliminer le caprolactame non polymérisé et séché à 100°C sous vide pendant 48 heures.

Différents polymères ont été fabriqués avec des taux de polyamide étoile variables.

Les conditions d'obtention et les caractéristiques de ces polymères sont rassemblées dans le tableau 1 ci-dessous.

Tableau 1

| Polymère | % molaire de composés tétrafonctionnel | Durée de balayage | Rapport massique en polymère étoile | $\overline{M_n}$ | $D = \frac{\overline{M_w}}{\overline{M_n}}$ |
|---|---|---|---|---|---|
| | 0,5% | 60 min. | 0,60 | 10343 | 2,04 |
| B | 0,5% | 90 min. | 0,70 | 20630 | 1,97 |
| C | 0,5 % | 120 min. | 0,90 | 19400 | 1,46 |
| D | 0,5 % | 140 min. | 1,00 | 20900 | 1,25 |
| E | 0,3 % | 90 min. | 0,70 | 21152 | 1,8 |
| F | 0,8 % | 100 min. | 0,70 | 13661 | 1,3 |
| ex. comparatif 1 | 0 | 90 min. | 0,00 | 19550 | 2 |

Les propriétés rhéologiques et mécaniques de ces polymères sont rassemblées dans le tableau II ci-dessous.

Tableau II

| | A | B | C | D | E | F | 1 |
|---|---|---|---|---|---|---|---|
| Viscosité relative (1) | 2,07 | 2,06 | 2,02 | 2,15 | 2,56 | 1,77 | 2,7 |
| Indice de fluidité en milieu fondu (2) (g/10min) | 47 | 45 | 44 | 45 | 13,5 | 70,2 | 7,5 |
| Température de fusion °C | 219 | 218 | 217 | 217 | 219 | 217 | 221 |
| Température de cristallisation °C | 181 | 179 | 178 | 176 | 179 | 177 | 175 |
| Tg°C | 72 | 74 | 73 | 74 | 74 | 72 | 67 |
| Choc Izod entaillé (J/m) | 45 | 47 | 42 | 40 | 47,3 | 32 | 38,4 |
| Module de flexion (MPa) | 2400 | 2400 | 2500 | 2500 | 3300 | 2700 | 2500 |
| Allongement % | 160 | 140 | 100 | 80 | 140 | 70 | 100 |
| Résistance à la traction (MPa) | 78 | 78 | 76 | 80 | 78 | 80 | 78 |
| (1) Viscosité relative mesurée à partir d'une solution à 1% de polymère dans $H_2SO_4$ à 96%<br>(2) Indice de fluidité (MFI) déterminé selon la nonne ASTM D1238 | | | | | | | |

Ces résultats montrent clairement que pour des masses moléculaires équivalentes, l'indice de fluidité en milieu fondu augmente de manière drastique quand la concentration en composé multifonctionnel atteint environ 0,50 %.

Exemple 2 : Compositions chargées

Des compositions comprenant une matrice en polyamide sont chargées avec des fibres de verre par mélange à l'état fondu en extrudeuse bi-vis type WERNER et PFLEIDERER ZSK 40.

Ainsi des compositions contenant 50 % en poids de fibres de verre sont réalisées respectivement avec un PA 6 classique, ou un polyamide conforme à l'invention présentant un rapport massique en polymère étoile égal soit à 0,78, soit à 0,98.

Les paramètres de réalisation du mélange et de l'extrusion sont rassemblés dans le tableau III suivant :

Tableau III

| Matrice | PA 6 | Polyamide avec rapport massique en polymère étoile égal à 0,78 | Polyamide avec rapport massique en polymère étoile égal à 0,98 |
|---|---|---|---|
| Température d'extrusion | 250°C | 250°C | 250°C |
| Vitesse de rotation de la vis (tour par min.) | 260 | 260 | 260 |
| Débit de composition (Kg/h) | 40 | 40 | 40 |
| couple du moteur (N.m) | 42 | 28 | 23 |
| Puissance moteur absorbée exprimée en Ampère (A) | 34 | 30 | 25 |

Les propriétés de ces compositions sont rassemblées dans le tableau IV ci-après.

Tableau IV

| Matrice | PA 6 | Polyamide avec rapport massique en polymère étoile égal à 0,78 | Polyamide avec rapport massique en polymère étoile égal à 0,98 |
|---|---|---|---|
| Module (M Pa) | 15350 | 15935 | 15792 |
| Choc Izod entaillé (J/m) | 124 | 139,3 | 128,3 |
| Choc Izod non entaillé (MPa) | 94 | 96 | 95 |
| HDT (°C) (1) | 215 | 214 | 215 |
| Indice de viscosité fondu (g/10min) | 6 | 12,5 | 12 |
| Test spirale (cm) (2) | 25 | 50 | 46 |

(1) mesurée selon la norme ASTM D648 sous une charge de 1,82 $N/mm^2$

(2) Ce test consiste à injecter la composition dans un moule en forme de spirale d'épaisseur 1mm et de largeur 40mm sous une presse BATTENFELD de 180 tonnes à une température de 270°C, une température de moule de 80°C et une pression d'injection de 80 $Kg/cm^2$. La durée d'Injection est de 1,5 secondes. Le résultat du test est déterminé par la longueur de moule remplie correctement par la composition.

De même, une composition comprenant 60 % en poids de fibres de verre et comme matrice un polyamide de type PA6 avec un rapport massique en polymère étoile égal à 0,78 est préparée selon le procédé décrit précédemment avec des conditions de mélange et extrusion suivantes :

- Température : 250 °C
- Vitesse de rotation de la vis : 260 tours par min.
- Débit de la composition : 40 Kg/h

Les propriétés de cette composition sont indiquées dans le tableau V ci-dessous en comparaison avec une composition comprenant 60% en poids de fibres de verre et comme matrice un polyamide PA6 linéaire avec poids moléculaire identique :

Tableau V

| Matrice | PA 6 avec 60% de fibr de verre | Polyamide avec rapport massique en polymère étoile égal à 0.78 |
|---|---|---|
| Module (MPa) | 18556 | 20251 |
| Choc Izod entaillé (J/m) | 123 | 118 |

Suite de tableau

| Matrice | PA 6 avec 60% de fibr de verre | Polyamide avec rapport massique en polymère étoile égal à 0.78 |
|---|---|---|
| Choc Izod non entaillé (MPa) | 83 | 86 |
| HDT(°C)(1) | 215 | 215 |
| Test spirale (cm) (2) | 24 | 35 |
| couple du moteur (N.m) | 43 | 32 |
| Puissance moteur absorbée exprimée en Ampère (A) | 35 | 25 |

<u>Exemple 3 :</u> Synthèse d'un deuxième type polymère conforme à l'invention

Selon un mode opératoire identique à celui de l'exemple 1 un polyamide conforme à l'invention est fabriqué à partir d'un mélange de monomères suivant :

- 4444 g de caprolactame
- 54 g de 1,3 diaminopropane - N,N,N',N' acide tétraacétique
- 160 g d'eau distillée

Les propriétés du polymère (G) obtenu sont rassemblées dans le tableau VI ci-dessous.

<u>Exemple 4 :</u> Synthèse d'un troisième type polymère conforme à l'invention

Selon un mode opératoire identique à celui de l'exemple 1 un polyamide conforme à l'invention est fabriqué à partir d'un mélange de monomères suivant :

- 4444 g de caprolactame
- 71 g de JEFFAMINES T 403 commercialisée par la société HUNTSMAN
- 160 g d'eau distillée

Les propriétés du polymère (H) obtenu sont rassemblées dans le tableau VI ci-dessous.
Un polymère (J) a été fabriqué avec les mêmes composés de l'exemple ci-dessus mais en utilisant 142 g de JEFFAMINES au lieu de 71 g. Les propriétés de ce polymère sont rassemblées dans le tableau VI.
A titre d'exemple comparatif, un polymère de type polyamide classique a été réalisé dans les mêmes conditions mais en utilisant comme monomères uniquement un mélange contenant 4444 g de caprolactame et 160 g d'eau. Les propriétés de ce polymère 2 sont indiquées dans le tableau VI.

Tableau VI

| | G | H | J | 2 |
|---|---|---|---|---|
| Viscosité relative (1) | 2,15 | 2,05 | 1,70 | 2,70 |
| Nombre de terminaisons amine (meq/Kg) | 26 | 104 | 190 | 52 |
| Nombre de terminaisons acide (meq/Kg) | 115 | 20 | 17 | 50 |
| Indice de fluidité en milieu fondu (2) (g/10min) | 26 | 13 | 35 | 7,5 |
| Température de fusion °C | 219 | 218 | 216 | 221 |
| Température de cristallisation °C | 174 | 172 | 168 | 175 |
| Choc Izod entaillé (J/m) | 48 | 49 | 44 | 38,4 |
| Module de flexion (MPa) | 2535 | 2690 | 2782 | 2500 |
| Allongement % | 145 | 59 | 42 | 100 |

Suite de tableau

| | G | H | J | 2 |
|---|---|---|---|---|
| Résistance à la traction (MPa) | 65 | 73 | 72 | 78 |
| (1) Viscosité relative mesurée à partir d'une solution à 1% de polymère dans $H_2SO_4$ à 96%<br>(2) Indice de fluidité (MFI) déterminé selon la norme ASTM D1238 | | | | |

Exemple 5 : Compositions chargées

Des compositions ont été préparées par extrusion avec une extrudeuse WERNER ZSK 40 à une température de 250°C d'un mélange comprenant comme matrice polymérique un polymère préparé aux exemples 3 et 4 et, 50 % en poids par rapport à la masse de la composition totale de fibres de verre.

Les propriétés de ces compositions sont rassemblées dans le tableau VII ci-dessous :

Tableau VII

| Matrice | Polymère 2 (PA 6) | Polymère G | Polymère H | Polymère J |
|---|---|---|---|---|
| Module (MPa) | 15300 | 15060 | 15200 | 15100 |
| Choc Izod entaillé (J/m) | 124 | 121 | 121 | 123 |
| Résistance à la traction ($N/mm^2$) | 220 | 216 | 214 | 211 |
| HDT (°C) (1) | 211 | 210 | 207 | 208 |
| Indice de viscosité fondu (g/10min) | 5,2 | 13,7 | 9,3 | 14,4 |
| Test spirale (cm) (2) | 21,5 | 35 | 43 | 45 |
| (1) mesurée selon la norme ASTM D648 sous une charge de 1,82 $N/mm^2$<br>(2) Ce test consiste à injecter la composition dans un moule en forme de spirale d'épaisseur 1mm et de largeur 40 mm sous une presse BATTENFELD de 180 tonnes à une température de 270°C, une température de moule de 80°C et une pression d'injection de 80 $Kg/cm^2$. La durée d'injection est de 1,5 secondes. La résultat du test est déterminé par la longueur de moule remplie correctement par la composition. | | | | |

## Revendications

1. Composition comprenant une matrice polymérique et des charges, **caractérisée en ce que** la matrice polymérique comprend un polyamide comprenant des chaînes macromoléculaires répondant à la formule I suivante:

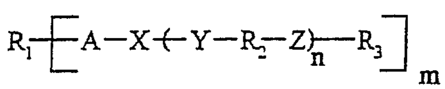

(I)

et à des chaînes macromoléculaires répondant à la formule II suivante

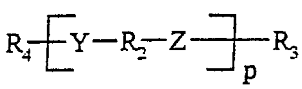

(II)

dans lesquelles :

- Y est le radical

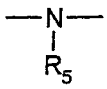

quand X et Z représentent le radical

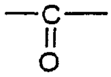

- Y est le radical

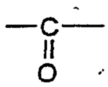

quand X et Z représentent le radical

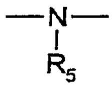

- A est une liaison covalente ou un radical hydrocarboné aliphatique pouvant comprendre des hétéroatomes et comprenant de 1 à 20 atomes de carbone
- R2 est un radical hydrocarboné aliphatique ou aromatique ramifié ou non comprenant de 2 à 20 atomes de carbone
- R3, représente :

    - l'hydrogène lorsque Z représente le radical

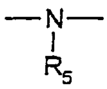 ;

    - l'hydroxyle lorsque Z représente le radical

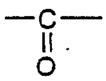 ;

ou

    - un radical hydrocarboné comprenant un groupement :

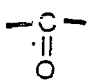 ou 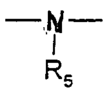

- R4 représente :

    - l'hydrogène lorsque Y représente le radical

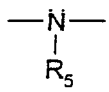
;

- l'hydroxyle lorsque Y représente le radical

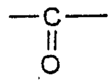
;

ou
- un radical hydrocarboné comprenant un groupement :

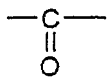
ou
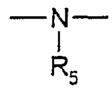

- R5 représente l'hydrogène ou un radical hydrocarboné comprenant de 1 à 6 atomes de carbone
- R1 est un radical hydrocarboné comprenant au moins 2 atomes de carbone, linéaire ou cyclique, aromatique ou aliphatique et pouvant comprendre des hétéroatomes
- m représente un nombre entier compris entre 3 et 8
- n représente un nombre compris entre 100 et 200
- p représente un nombre compris entre 100 et 200; les paramètres n et p sont égaux ;

et le rapport massique entre le poids de chaînes polymériques de formule I et le poids total de chaînes polymériques de formule I et II est compris entre 0,6 et 0,98.

**2.** Composition selon la revendication 1 **caractérisée en ce que** la proportion pondérale de charges dans la composition est comprise entre 40% et 80%.

**3.** Composition selon la revendication 1 **caractérisée en ce que** la proportion pondérale de charges dans la composition est comprise entre 50% et 80%.

**4.** Composition selon l'une des revendications 1 à 3 **caractérisée en ce que** les charges sont choisies dans le groupe comprenant les charges fibreuses telles que fibres de verre, de carbone, minérale ou en matière thermodurcissable, les charges en poudre telles que le talc.

**5.** Composition selon l'une des revendications 1 à 4 **caractérisée en ce que** les charges sont des charges ignifugeantes.

**6.** Composition selon l'une des revendications précédentes **caractérisée en ce que** R2 est un radical pentaméthylénique.

**7.** Composition selon l'une des revendications précédentes **caractérisée en ce que** R1 représente le radical cyclohexanontétrayle, le radical 1,1,1-triyle propane, le radical 1,2,3-triyle propane, le radical:

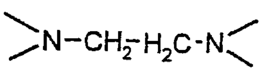

**8.** Composition selon l'une des revendications précédentes **caractérisée en ce que** A représente un radical méthylène, polyméthylénique ou polyoxyalkylènique.

**9.** Composition selon l'une des revendications précédentes **caractérisée en ce que** m est égal à 3 ou 4.

**10.** Composition selon l'une des revendications 1 à 9 **caractérisée en ce que** la matrice polymérique est constituée des chaînes macromoléculaires telles que définies dans l'une des revendications 1 à 9.

**11.** Composition selon la revendication 10 **caractérisée en ce que** qu'elle comprend une matrice polymérique constituée par un mélange d'un polyamide linéaire et d'un polyamide tels que défini dans l'une des revendications 1 à 9.

**12.** Composition selon la revendication 11 **caractérisée en ce que** la matrice polymérique comprend 30 à 80% en poids de chaînes macromoléculaires telles que définies dans l'une des revendications 1 à 9.

**13.** Composition selon la revendication 12 **caractérisée en ce que** le rapport massique en chaînes macromoléculaires de formule I dans le polyamide comprenant des chaînes macromoléculaires de formule I et éventuellement II est supérieur à 0,8.

**14.** Procédé de fabrication d'une composition selon l'une des revendications précédentes, comprenant une étape de synthèse d'un polyamide, et une étape de mélange de la charge avec le polyamide à l'état fondu, par extrusion, **caractérisé en ce que** le polyamide est obtenu par un procédé consistant à polycondenser un aminoacide de formule :

$$HOOC—R_2—NH_2. \qquad (III)$$

et/ou d'un lactame de formule

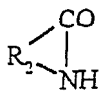

(IV)

en présence d'un composé polyfonctionnel de formule :

$$- R_1 \left[ A-X-H \right]_m \qquad (V)$$

lorsque X représente le radical

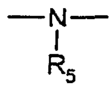

;

et

$$- R_1\text{-}[\text{-}A\text{-}X\text{-}OH]m \quad (V)$$

lorsque X représente le radical

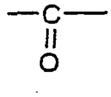

;

et
dans laquelle A, $R_1$, $R_2$, X et m ont les significations indiquées précédemment, en présence d'un composé initiateur de polycondensation.

**15.** Procédé selon la revendication 14 **caractérisé en ce que** l'initiateur de polycondensation est de l'eau, un acide minéral ou carboxylique ou une amine primaire.

**16.** Procédé selon l'une des revendications 14 ou 15 **caractérisée en ce que** le composé polyfonctionnel de formule (V) est choisi dans le groupe comprenant le composé 2,2,6,6-tétra-(β-carboxyéthyl) cyclohexanone, le composé diaminopropane - N,N,N',N' acide tétraacétique, les triamines commercialisées sous le nom JEFF AMINES T, et obtenues par réaction de l'oxyde de propylène sur le triméthylol propane ou le glycérol et amination des extrémités hydroxydes.

**17.** Procédé selon l'une des revendications 14 à 16 **caractérisée en ce que** la concentration pondérale dans la masse réactionnelle, en initiateur de polycondensation est comprise entre 0,5 % et 5 %.

**Patentansprüche**

**1.** Zusammensetzung, umfassend eine Polymermatrix und Füllstoffe, **dadurch gekennzeichnet, dass** die Polymermatrix ein Polyamid mit makromolekularen Ketten umfasst, die der folgenden Formel I:

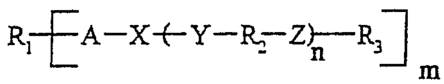

(I)

und makromolekularen Ketten entsprechen, die der folgenden Formel II entsprechen:

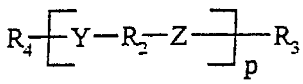

(II)

worin;

- Y der Rest

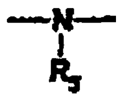

ist, wenn X und Z den Rest

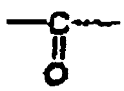

darstellen
- Y der Rest

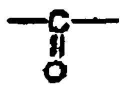

ist, wenn X und Z den Rest

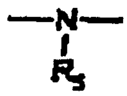

darstellen

- A eine kovalente Bindung oder ein aliphatischer Kohlenwasserstoffrest ist, der Heteroatome umfassen kann und 1 bis 20 Kohlenstoffatome umfasst
- $R_2$ ein verzweigter oder nicht verzweigter, aliphatischer oder aromatischer Kohlenwasserstoffrest mit 2 bis 20 Kohlenstoffatomen ist
- $R_3$ darstellt:

  - Wasserstoff, wenn Z den Rest

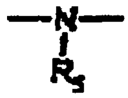

  darstellt;
  - Hydroxyl, wenn Z den Rest

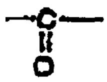

  darstellt; oder
  - einen Kohlenwasserstoffrest, der eine Gruppe:

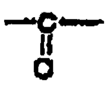 oder 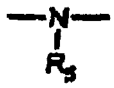

  umfasst

- $R_4$ darstellt:

  - Wasserstoff, wenn Y den Rest

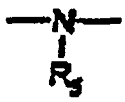

  darstellt;
  - Hydroxyl, wenn Y den Rest

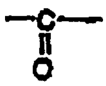

  darstellt; oder
  - einen Kohlenwasserstoffrest, der eine Gruppe:

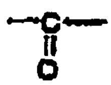 oder 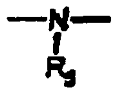

umfasst

- $R_5$ Wasserstoff oder einen Kohlenwasserstoffrest mit 1 bis 6 Kohlenstoffatomen darstellt
- $R_1$ ein linearer oder cyclischer, aromatischer oder aliphatischer Kohlenwasserstoffrest mit wenigstens 2 Kohlenstoffatomen, der Heteroatome umfassen kann, ist,
- m eine ganze Zahl zwischen 3 und 8 darstellt
- n eine Zahl zwischen 100 und 200 darstellt
- p eine Zahl zwischen 100 und 200 darstellt; die Parameter n und p gleich sind und das Massenverhältnis zwischen dem Gewicht an Polymerketten der Formel I und dem Gesamtgewicht an Polymerketten der Formel I und II zwischen 0,6 und 0,98 liegt.

**2.** Zusammensetzung gemäß Anspruch 1, **dadurch gekennzeichnet, dass** der Gewichtsanteil an Füllstoffen in der Zusammensetzung zwischen 40 % und 80 % liegt.

**3.** Zusammensetzung gemäß Anspruch 1, **dadurch gekennzeichnet, dass** der Gewichtsanteil an Füllstoffen in der Zusammensetzung zwischen 50 % und 80 % liegt.

**4.** Zusammensetzung gemäß einem der Ansprüche 1 bis 3, **dadurch gekennzeichnet, dass** die Füllstoffe aus der Gruppe ausgewählt sind, die die faserförmigen Füllstoffe, wie Glasfasern, Kohlenstofffasern, mineralische Fasern oder solche aus wärmehärtbarem Material, die pulverförmigen Füllstoffe, wie Talk, umfasst.

**5.** Zusammensetzung gemäß einem der Ansprüche 1 bis 4, **dadurch gekennzeichnet, dass** die Füllstoffe feuerhemmende Füllstoffe sind.

**6.** Zusammensetzung gemäß einem der vorhergehenden Ansprüche, **dadurch gekennzeichnet, dass** $R_2$ ein Pentamethylenrest ist.

**7.** Zusammensetzung gemäß einem der vorhergehenden Ansprüche, **dadurch gekennzeichnet, dass** $R_1$ den Cyclohexanontetraylrest, den Propan-1,1,1-triylrest, den Propan-1,2,3-triylrest, den Rest:

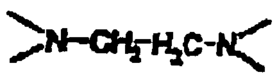

darstellt.

**8.** Zusammensetzung gemäß einem der vorhergehenden Ansprüche, **dadurch gekennzeichnet, dass** A einen Methylen-, Polymethylen- oder Polyoxyalkylenrest darstellt.

**9.** Zusammensetzung gemäß einem der vorhergehenden Ansprüche, **dadurch gekennzeichnet, dass** m gleich 3 oder 4 ist.

**10.** Zusammensetzung gemäß einem der Ansprüche 1 bis 9, **dadurch gekennzeichnet, dass** die Polymermatrix aus den makromolekularen Ketten, wie in einem der Ansprüche 1 bis 9 definiert, besteht.

**11.** Zusammensetzung gemäß Anspruch 10, **dadurch gekennzeichnet, dass** sie eine Polymermatrix umfasst, die aus einem Gemisch eines linearen Polyamids und eines Polyamids, wie in einem der Ansprüche 1 bis 9 definiert, besteht.

**12.** Zusammensetzung gemäß Anspruch 11, **dadurch gekennzeichnet, dass** die Polymermatrix 30 bis 80 Gew.-% makromolekulare Ketten, wie In einem der Ansprüche 1 bis 9 definiert, umfasst.

**13.** Zusammensetzung gemäß Anspruch 12, **dadurch gekennzeichnet, dass** das Massenverhältnis an makromotekularen Ketten der Formel I in dem Polyamid, das makromolekulare Ketten der Formel I und gegebenenfalls II umfasst, höher als 0,8 ist.

**14.** Verfahren zur Herstellung einer Zusammensetzung gemäß einem der vorhergehenden Ansprüche, das einen Schritt zur Synthese eines Polyamids und einen Schritt zum Mischen des Füllstoffs mit dem Polyamid in geschmolzenem Zustand durch Extrusion umfasst, **dadurch gekennzeichnet, dass** das Polyamid erhalten wird durch ein Verfahren, das besteht aus einer Polykondensation einer Aminosäure der Formel:

$$HOOC—R_2—NH_{2,} \qquad (III)$$

und/oder eines Lactams der Formel

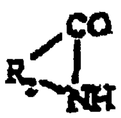 (IV)

in Gegenwart einer polyfunktionellen Verbindung der Formel:

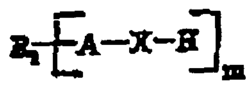 (V)

wenn X den Rest

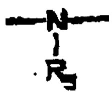

darstellt; und

$$-R_1[-A-X-OH]m , \qquad (V)$$

wenn X den Rest

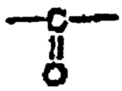

darstellt; und worin A, $R_1$, $R_2$, X und m die zuvor angegebenen Bedeutungen haben, in Gegenwart einer Verbindung, die die Polykondensation initilert.

**15.** Verfahren gemäß Anspruch 14, **dadurch gekennzeichnet, dass** der Polykondensationsinitiator Wasser, eine anorganische Säure oder eine Carbonsäure oder ein primäres Amin ist.

**16.** Verfahren gemäß einem der Ansprüche 14 oder 15, **dadurch gekennzeichnet, dass** die polyfunktionelle Verbindung der Formel (V) aus der Gruppe ausgewählt ist, die die Verbindung 2,2,6,6-Tetra-(β-carboxyethyl)-Cyclohexanon, die Verbindung N,N,N',N'-Tetraessigsäure-diaminopropan, die Triamine, die unter dem Namen JEFFAMINES T verkauft und durch Reaktion von Propylenoxid mit Trimethylolpropan oder Glycerol und Aminierung der Hydroxidenden erhalten werden, umfasst.

**17.** Verfahren gemäß einem der Ansprüche 14 bis 16, **dadurch gekennzeichnet, dass** die Gewichtskonzentration In der Reaktionsmasse an Polykondensationsinitiator zwischen 0,5 % und 5 % liegt.

## Claims

1. Composition comprising a polymeric matrix and fillers, **characterized in that** the polymeric matrix comprises a polyamide having macromolecular chains of formula I below:

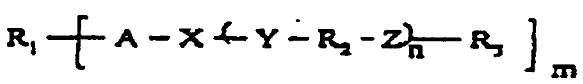

(I)

and having macromolecular chains of formula II below:

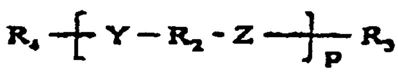

(II)

in which:

- Y is the

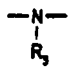

radical when X and Z represent the

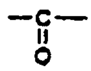

radical;
- Y is the

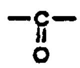

radical when X and Z represent the

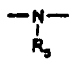

radical;
- A is a covalent bond or an aliphatic hydrocarbon radical possibly comprising heteroatoms and having from 1 to 20 carbon atoms;
- $R_2$ is a branched or unbranched, aliphatic or aromatic hydrocarbon radical having from 2 to 20 carbon atoms;
- $R_3$ represents:
- hydrogen when Z represents the

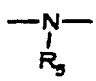

radical;

- hydroxyl when Z represents the

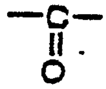

radical; or

- a hydrocarbon radical comprising a group:

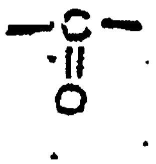

or

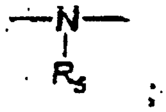

- $R_4$ represents;

- hydrogen when Y represents the

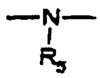

radical;

- hydroxyl when Y represents the

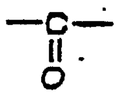

radical; or

- a hydrocarbon radical comprising a group:

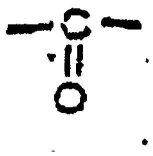

or

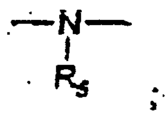

- $R_5$ represents hydrogen or a hydrocarbon radical having from 1 to 6 carbon atoms;

- $R_1$ is an aromatic or aliphatic, linear or cyclic hydrocarbon radical having at least 2 carbon atoms and possibly including heteroatoms;

- m represents an integer between 3 and 8;

- n represents a number between 100 and 200;

- p represents a number between 100 and 200, the parameters m and p are equal; and the mass ratio of the weight of polymeric chains of formula I to the total weight of polymeric chains of formulae I and II is between 0.6 and 0.98.

2. Composition according to Claim 1, **characterized in that** the proportion by weight of fillers in the composition is between 40% and 80%.

3. Composition according to Claim 1, **characterized in that** the proportion by weight of fillers in the composition is

between 50% and 80%.

4. Composition according to one of Claims 1 to 3, **characterized in that** the fillers are chosen from the group comprising fibrous fillers such as glass fibres, carbon fibres, mineral fibres or fibres made of a thermosetting material, or powdery fillers such as talc.

5. Composition according to one of Claims 1 to 4, **characterized in that** the fillers are fire-retarding fillers.

6. Composition according to one of the preceding claims, **characterized in that** R2 is a pentamethylene radical.

7. Composition according to one of the preceding claims, **characterized in that** R1 represents the cyclohexanontetrayl radical, the propane-1,1,1-triyl radical, the propane-1,2,3-triyl radical or the

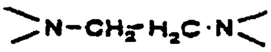

radical.

8. Composition according to one of the preceding claims, **characterized in that** A represents a methylene, polymethylene or polyoxyalkylene radical.

9. Composition according to one of the preceding claims, **characterized in that** m is equal to 3 or 4.

10. Composition according to one of Claims 1 to 9, **characterized in that** the polymeric matrix consists of macromolecular chains as defined in one of Claims 1 to 9.

11. Composition according to Claim 10, **characterized in that** it comprises a polymeric matrix consisting of a blend of a linear polyamide and of a polyamide as defined in one of Claims 1 to 9.

12. Composition according to Claim 11, **characterized in that** the polymeric matrix comprises 30 to 80% by weight of macromolecular chains as defined in one of Claims 1 to 9.

13. Composition according to Claim 12, **characterized in that** the mass ratio of macromolecular chains of formula I in the polyamide comprising macromolecular chains of formula I and possibly II is greater than 0.8.

14. Process for manufacturing a composition according to one of the preceding claims, comprising a step of synthesizing a polyamide and a step of blending the filler with the polyamide in the melt, by extrusion, **characterized in that** the polyamide is obtained by a process consisting of the polycondensation of an amino acid of formula:

$$HOOC—R_2—NH_2 \quad (III)$$

and/or a lactam of formula:

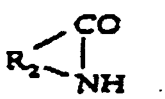

(IV)

in the presence of a polyfunctional compound of formula:

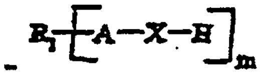

(V)

when X represents the

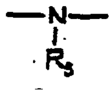 ;

and

$$-R_1-[A-X-OH]m \qquad (V)$$

when X represents the

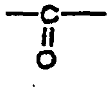 ;

and in which A, $R_1$, $R_2$, X and m have the same meanings as indicated above, in the presence of a polycondensation-initiating compound.

**15.** Process according to Claim 14, **characterized in that** the polycondensation initiator is water, a mineral or carboxylic acid or a primary amine.

**16.** Process according to either of Claims 14 and 15, **characterized in that** the polyfunctional compound of formula (V) is chosen from the group comprising the compound 2,2,6,6-tetra(β-carboxyethyl)cyclohexanone, the compound N, N, N',N'-diaminopropanetetraacetic acid, triamines sold under the name JEFFAMINES T and obtained by the reaction of propylene oxide on trimethylolpropane or glycerol, and amination of the hydroxyl end groups.

**17.** Process according to one of Claims 14 to 16, **characterized in that** the weight concentration in the reaction mass of the polycondensation initiator is between 0.5% and 5%.